# EUROPEAN PATENT SPECIFICATION

(11) **EP 1 217 889 B1**
(45) Date of publication and mention of the grant of the patent: **16.04.2003**
(21) Application number: 00966392.3
(22) Date of filing: 04.10.2000
(51) Int. Cl.: A01N 25/10, A01N 25/00, A01N 33/12

(54) **A METHOD FOR INCREASING CROPS YIELD**
VERFAHREN ZUR ERHÖHUNG DES ERTRAGES VON NUTZPFLANZEN
PROCEDE RELATIF A L'AUGMENTATION DU RENDEMENT DE RECOLTES

(30) Priority: 07.10.1999 IL 13226599
(43) Date of publication of application: 03.07.2002
(73) Proprietor: Ecotex Soil Mulch Products Ltd, 85122 M.P. Hanegev (IL); THE STATE OF ISRAEL-MINISTRY OF AGRICULTURE, 50250 Beit-Dagan (IL)
(72) Inventor: BEKER, Eliezer, 85122 M.P. Hanegev (IL); BAR, Zvi, 79304 M.P. Hof Ashkelon (IL); GAMLIEL, Abraham, 76875 Kefar Hanagid (IL)
(74) Representative: Söllner, Udo
(86) International application number: IL0000619
(87) International publication number: WO01024630

(56) References cited:
- EP-A- 0 177 226
- WO-A-98/01510
- DE-B- 1 290 007
- GB-A- 1 500 249
- US-A- 5 260 259
- PATENT ABSTRACTS OF JAPAN vol. 1997, no. 07, 31 July 1997 (1997-07-31) & JP 09 077609 A (DAINIPPON INK), 25 March 1997 (1997-03-25)
- DATABASE CHEMABS [Online] CHEMICAL ABSTRACTS SERVICE, COLUMBUS, OHIO, US; J.R.TEASDALE: "Avoidance of herbicide injury by placement between rows of polyethylene mulch" retrieved from STN-INTERNATIONAL, accession no. 103:191387 CA XP002159548 & HORTSCIENCE, vol. 20, no. 5, 1985, pages 871-872,
- DATABASE WPI Section Ch, Week 197813 Derwent Publications Ltd., London, GB; Class A97, AN 1978-24032A XP002159549 & JP 53 015423 A (SANYO KK), 13 February 1978 (1978-02-13)
- DATABASE WPI Section Ch, Week 200018 Derwent Publications Ltd., London, GB; Class A97, AN 2000-199585 XP002159550 & JP 2000 004687 A (MANABE SANGYO KK), 11 January 2000 (2000-01-11)

## Description

### FIELD OF THE INVENTION

The present invention relates to a method for increasing crops yield by reducing damage and injuries to crops. More specifically the present invention relates to a method for reducing or even preventing the phytotoxic effects caused by herbicides, such as goal, while keeping their efficiency against weeds, by spraying a polymer formulation either after, or simultaneously with, spraying the herbicide, as part of soil preparation before planting seedlings or after seeding.

### BACKGROUND OF THE INVENTION

Weeds are one of the main factors that reduce crops yield by competing with the cultivated plants for water and soil resources , hence extensive efforts are put into research of known herbicides and in developing new herbicides. Herbicides can be generally divided into two groups, those that are specific to certain vegetation and are harmless to others and those that are usually more effective but are non-specific, thus although they are very effective in preventing undesired vegetation they are phytotoxic to the cultivated plants as well.

For example, oxyfluorofen, 2-chloro-1-(3-ethoxy-4-nitrophenoxy)-4-(trifluromethyl) benzene, known by the commercial name goal, is a well known herbicide that controls the growth of undesired vegetation such as weeds by preventing their sprouting.

There is a main problem associated with goal that increase the risk of an undesirable contact between the herbicide and the cultivated plants, thus increasing the risk of phytotoxic effects and injury to the plants. This is its adhesion to the soil that prevents its being rinsed by water deeper into the ground. Because of its relative immobility, goal accumulates at a depth of 2-3 cm below the soil surface and its presence in the upper layer of soil is prolonged. Upon water sprinkling (irrigation), soil particles loaded with goal or water droplets that have been in contact with the herbicide are spattered off the ground, hitting the plants and causing injury and damage to their stems.

This problem significantly limits the possibilities for the use of goal and therefore, although it is very effective, its use is limited only to a very small number of cultivated plants that are relatively resistant to its toxicity and to cases where a total elimination of vegetation is needed. For many cultivated plants, such as tomatoes, pepper, watermelon etc., it cannot be used.

In general, the main problem associated with herbicides is to find the best balance between maximizing their activity against weeds (in order to minimize the damage caused to the cultivated plants by undesired vegetation) and between minimizing the injuries that they might cause to the cultivated plants. In other words, to find the optimal balance between two opposite effects in order to maximize the crops yield.

The present invention provides a method for minimizing and even preventing the phytotoxic effects of herbicides, such as goal, while keeping their efficiency against weeds, by spraying the soil with a polimer compsition either after, or simultaneously with, spraying the herbicide, as part of the soil preparation before planting or after seeding. The polymer mulch that is formed upon the polymer drying behaves as a barrier between the soil and the plant parts that are above the ground and prevents the possible contact between the plant and soil particles or water droplets contaminated with goal that might occur during irrigation or winds. It also reduces the herbicide evaporation.

Plastic mulch is a widely used method in various agricultural practices because of the many benefits they provide for field crop and for vegetable production.

WO 98/01510 discloses a new technology for soil mulching by spraying an aqueous solution of latex - based polymers that forms a continuous membrane film upon drying. The film thus produced provides a porous membrane that can withstand normal agricultural practices expected during crop growth. The level of permeability of the membrane film can be adjusted by the volume of compound which is sprayed. It was found that when applying a polymer film by this method (i.e., by spraying aqueos polymer solution) immediately after or simultaneousely with spraying herbicide, the effectivity of the herbicide against weeds remains almost the same while the phytotoxic effects are reduced significantly. This is most probably due to the nature of the polymer film obtained which fits exactly the contour of the ground, leaving no spaces between the soil and the mulch. This film acts as porous exterior skin that prevents soil particles and water droplets to be spattered off the ground while allowing air and water to diffuse into the ground and plants to emerge from the ground. It was found that by this method, the effectivity of the herbicide against weeds remains almost the same while the phytotoxic effects are reduced significantly when compared to the results obtained when only the herbicide is used. Comparing to applying plastic mulch alone (no herbicide) there is, of course, a significant decrease in weeds while the phytotoxic injuries to the cultivated plants are minimal. In both embodiments of the present invention (after and simultaneously) there is a significant increase in yield.

When both polymer and herbicide are sprayed simultaneously by incorporating an effective amount of herbicide into the mulch polymer mixture spray, the herbicide becomes an integral part of the plastic film thus formed. This embodiment of the present invention has, in addition to the above mentined benefits, the advantage of saving time and efforts.

The method according to the present invention can be applied for growing crops that are planted or seeded in the fields. When the cultivated plants are introduced into the field as seedlings (such as tomatoes, pepper etc.), the spraying of herbice and polymer formulation is done as part of the soil preparation and the polymer formulation is allowed to dry and to form a soil mulch before planting the seedlings. When the cultivars are seeded in the field (for example potatoes) the spraying of herbicide and of polymer formulation is conducted after the seeding such that when emergance occurs the emerging p. In both cases the polymer film acts as a barrier that prevebts contact between the herbicide and the plant parts that are above the ground. Thus the main problem associated with the use of herbicide, i.e., the potential phytotoxicity risk to the cultivated plants, is minimized. Moreover, it was found that the method of the the present invention has positive effect on the cultivated plants and enhance their yield.

### SUMMARY OF THE INVENTION

The present invention relates to a *method for preventing a herbicide from damaging the aboveground plant parts of cultivated plants, comprising spraying the soil surface with herbicide and with a membrane-forming polymer formulation either as a mixture or successively, first the herbicide then the polymer formulation, as part of the soil preparation before planting or after seeding. The polymers formulation can be sprayed by at least two steps, first of spraying a primer spray comprising of a low concentration polymer formulation in water with polymer concentration in the range of 2 to 10%w*/*w followed by at least one successive spraying of a* *higher polymer concentration formulation with polymer concentration of up to 50%w*/*w in water, wherein the herbicide is sprayed either before the first low-concentration primer formulation or is mixed with said primer formulation. The herbicide can be selected from the group consisting of oxyfluorofen, prometryne, diuron, trifluoroalin, linuron, ethalefluralin, pendimethalin, metribuzin, isopropalin, oxadiazon, dipenamid and zimazine.* According to a preferred embodiment of the present invention the polymers are latex - based polymers *selected from the group consisting of isoprene polymers, polyvinylacetate, polyvinylpyrolidone, styrene-acryl copolymer and sterene-butadiene copolymer.* The polymer formulation can contain surfactants.

The method according to the present invention can be conducted as part of soil preparation before planting seedlings and after irrigating the soil for cultivated plants that are introduced into the field as plants (for example, tomato, pepper, celery, watermelon, cabbage, etc.) or can be conducted after seeding for cultivated plants (such as potato, onion, peanut, watermelon, tomato, pepper etc.) that are seeded into the fields.

### DETAILED DESCRIPTION OF THE INVENTION

### Experimental

The following experiments, carried out with goal, clarify and demonstrate the present invention. They do not intend to limit the scope of the invention by any way and can be applied to other herbicides as well. In particular to herbicides selected from the group of prometryne, diuron, trifluoroalin, linuron, ethalefluralin, pendimethalin, metribuzin, isopropalin, oxadiazon, dipenamid and zimazine. It can also be applied to many more cultivated plants (introduced to the field either as seedlings or as seeds) than are demonstrated in the following examples.

### Experiments in pots

Preliminary experiments were carried out in a simulation site in Nir-Oz.

Four cultivated plants, watermelon, tomatoes, pepper and celery in 100 × 50 cm trays with loess soil of 10 cm depth, were subjected to treatment according to the four following schemes on 14/2/99:
a. Mixture of goal and latex polymers **(mix):** irrigating the soil, spraying with a primer polymer solution containing goal and latex polymers (7.78% w/w latex in water, 5 ml of oxyflurofen stock solution per liter of solution) at a dose of *30 liter*/*1000m*^{*2*} *(30 liter*/*dunam),* spraying a second layer of latex polymers solution (38.8% w/w in water) at a rate of *30 liter*/*1000m*^{*2*} *(30 liter*/*dunam),* waiting 24 hours, planting and irrigating.
b. First goal, then latex polymers **(goal + latex):** spraying goal (3 ml of stock solution per 1 liter of solution) at a rate of *50 liter*/*1000m*^{*2*} *(50 liter*/*dunam),* irrigating the soil, spraying plastic polymers solution in 2 successive applications of increasing concentration (same concentrations and rates as in scheme a), waiting 24 hours, planting and irrigating.
c. Only goal **(goal):** spraying goal (same concentration and rate as in b), irrigating, waiting 24 hours, planting and irrigating.
d. Only latex mulch **(latex):** irrigating the soil, spraying plastic polymers solution in 2 successive layers of increasing concentration (same concentrations and rates as in scheme a).

The stock herbicide solution contains 238 g/liter of oxyflurofen (goal).

Schemes a, b and c all result in the same total amount of goal per *1000 m*^{*2*} *(dunam)* of *(150 ml*/*1000m*^{*2*} *(150 ml*/*dunam)* of stock solution = *35.7 g*/*1000m*^{*2*} *(35.7 g*/*dunam)).* 3 and 4 weeks after planting two parameters were checked:
1. Weeds covering (% covering)
2. Phytotoxicity was measured on a scale from 0 - to 5, where 0 indicates a green healthy plant and 5 indicates a dead plant.

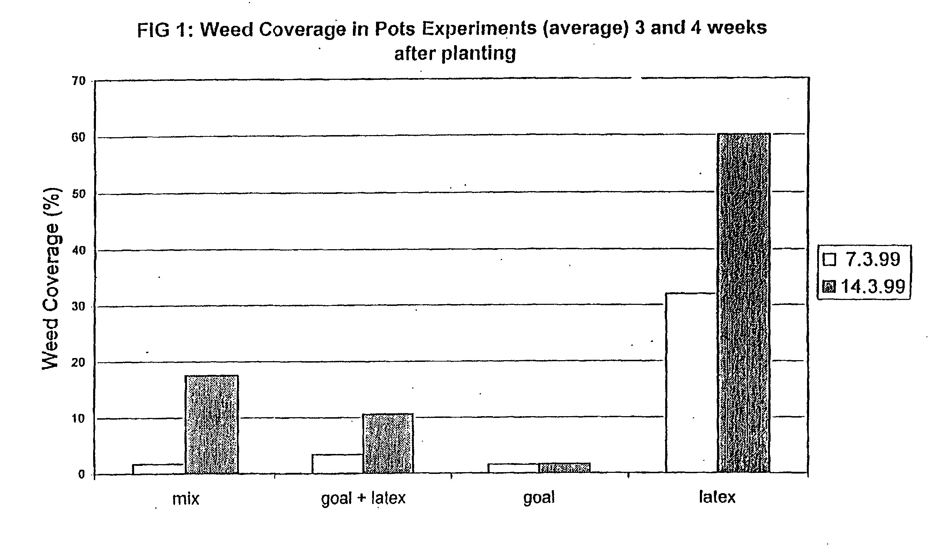

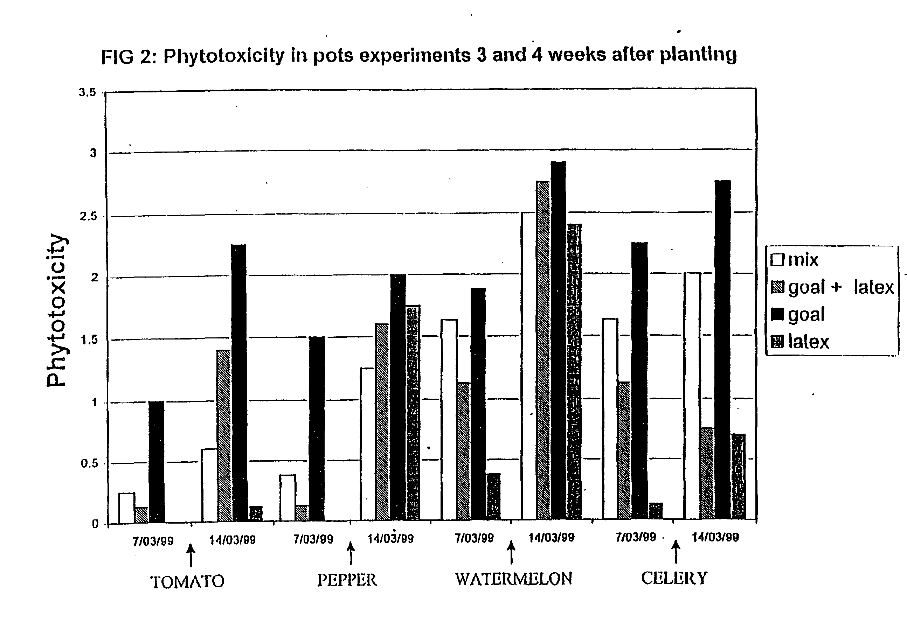

The results for both parameters are given in Tables 1 and 2 and are shown in Figs 1 and 2.

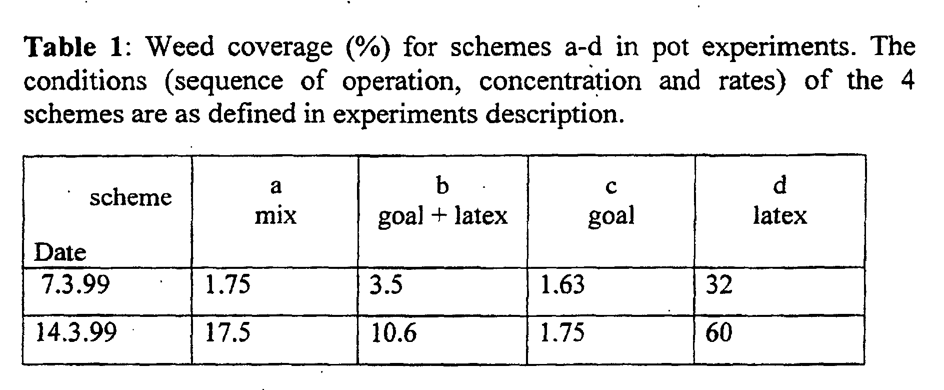

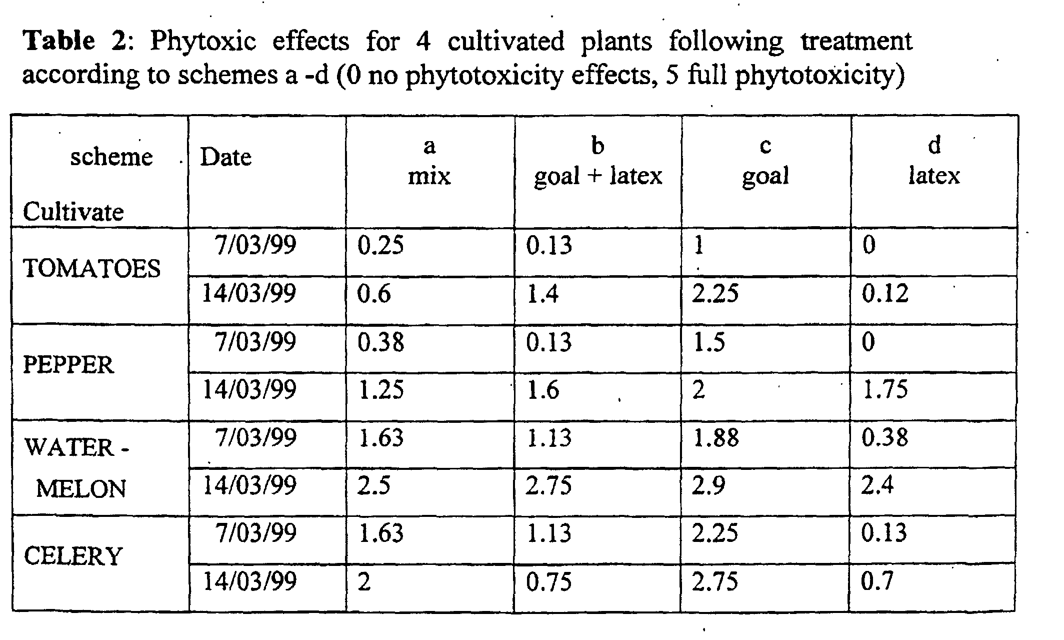

The results clearly show that spraying a mixture of goal and latex, or spraying latex after spraying goal (schemes a and b, respectively) reduced the weed covering significantly compared to the untreated control (scheme d) from 60% in the control to 17.5% and 10.6 respectively, although the herbicide affectivity was reduced as compared to spraying goal alone (scheme c) where only 1.75 weed coverage was obtained.

With respect to phytotoxicity, in both schemes a and b and for all 4 cultivars there was a significant reduction of phytotoxic effects as compared to the treatment by herbicide alone (scheme c). However, comparing schemes a and varies among the cultivars. For tomatoes, pepper and watermelon its seems that over time, treatment reduces phytotoxic effects better than scheme b. However, for the celery plants the situation is reversed.

Big differences were observed also in the plants vulnerability were no herbicide was applied at all (scheme d).

### Field Experiments

The experiments were carried out in a light loess field near Nir Oz with the same 4 cultivates as in the simulation experiments and according to same schemes a - d.

Each experiment (i.e. 4 cultivar x 4 schemes) was carried out in 4 randomly chosen plots, plot area: 9 × 1.93 = 17.37 m².

Phytotoxicity and weed coverage were checked 3 weeks after planting.

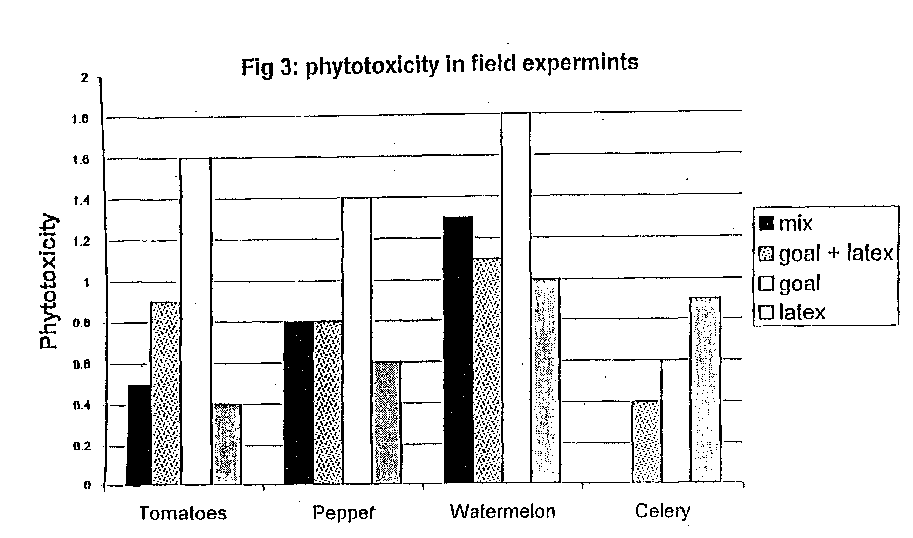

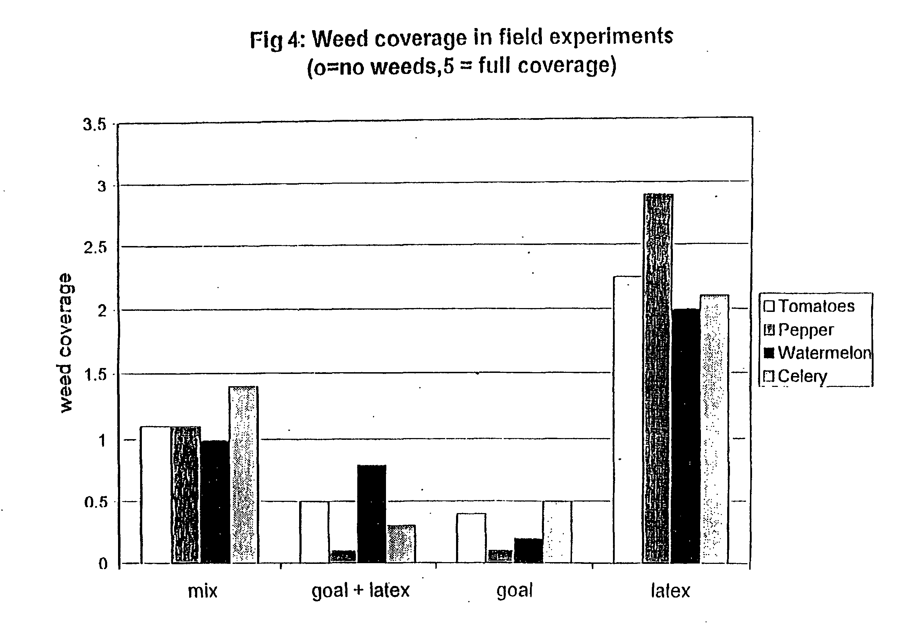

The obtained results of weed coverage and of phytotoxic effects are for the 4 cultivars are summarized in tables 3 and 4 and in Figs. 3 and 4.

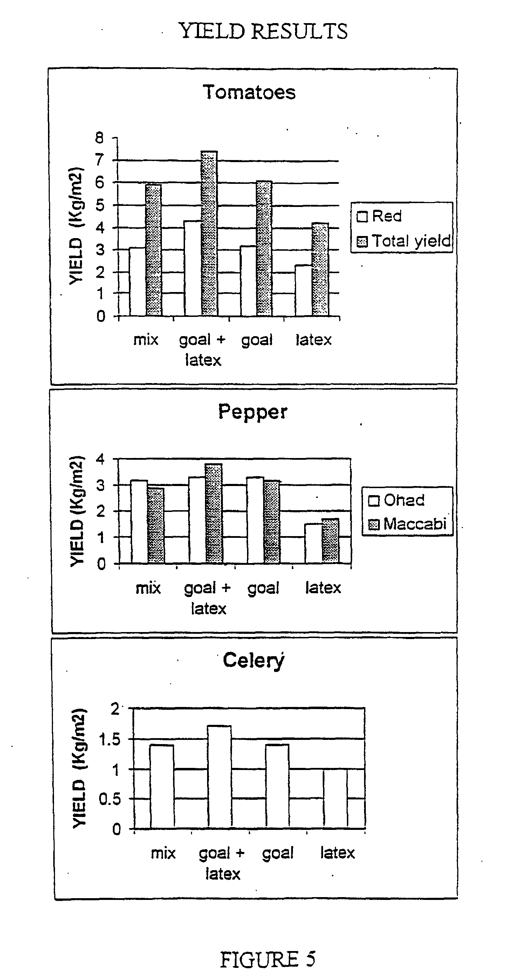

Table 5 and Fig 5 show the final total yield obtained after treatment according to the 4 schemes for tomato, celery and pepper.

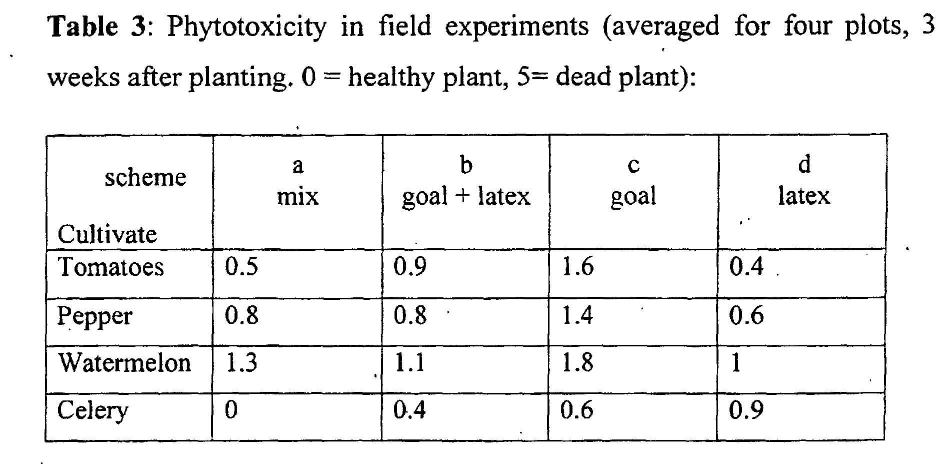

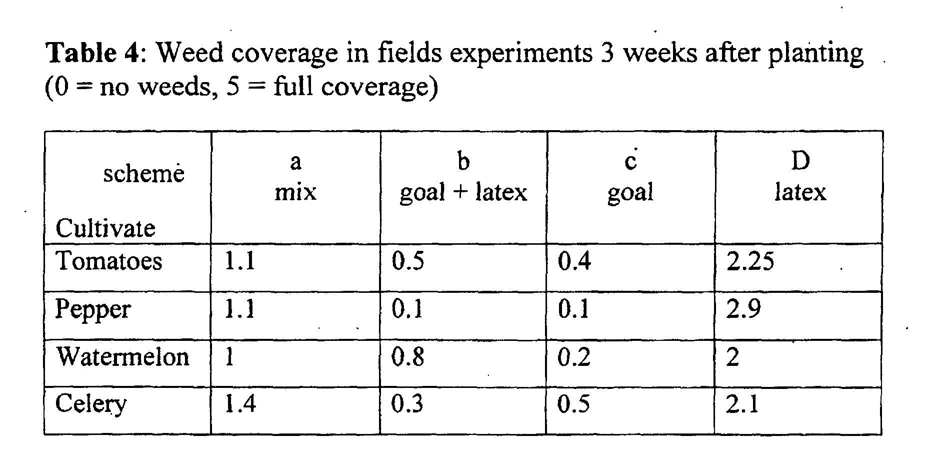

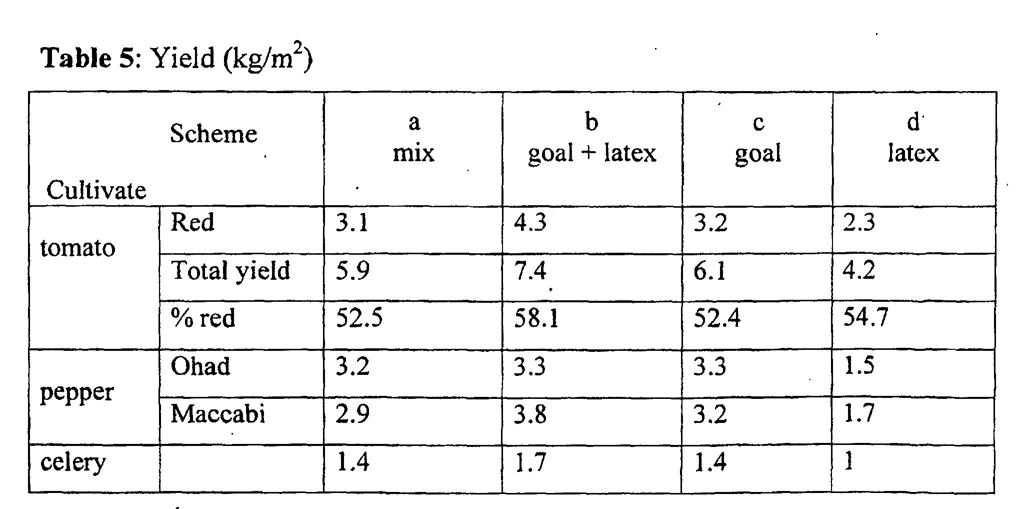

The results show that the combined treatment of goal and plastic mulch (whether scheme a or b) always reduces phytotoxicity as compared to the treatment with the herbicide alone while it decreases the weed coverage as compared to treatment with only plastic mulch (no herbicide).

The combined treatment of goal and plastic mulch, either sequentially or simultaneously, always gives better yield than mulch alone. The best yields are obtained for the treatment according to scheme b, i.e., the spraying of the plastic mulch after the herbicide spraying. Simultaneous praying of the mixture of plastic mulch and of herbicide, results in yields comparable to those obtained by spraying goal alone.

Another set of field experiments with tomatoes plants was carried out in order to find out how the color of the plastic mulch affects the yield. The treatment was according to scheme b (i.e., spraying goal followed by spraying plastic mulch), with two mixtures of plastic spray, one containing carbon black powder (black mulch) and the other without any color additives (transparent mulch). The results of this experiment are shown in the following Table 6.

**Table 6:**

| the yield (kg/m²) of tomato obtained with transparent and with black plastic mulch according to scheme b. | | |
|---|---|---|
| | transparent | Black |
| Green | 30 | 28.9 |
| Red | 49.1 | 36.4 |
| Total yield | 79.1 | 65.3 |
| %red | 62.1 | 55.7 |
| Total yield/m² | 8.2 | 6.8 |
| Red yield/m² | 5.1 | 3.6 |

These results show clearly that better yields are obtained with transparent plastic mulch. This most probably stems from the fact that the black plastic mulch enhances the herbicide evaporation, thus the amount of weeds increases and interferes with the cultivated plants.

## Claims

1. A method for preventing a herbicide from damaging the aboveground plant parts of cultivated plants, comprising spraying the soil surface with herbicide and with a membrane-forming polymer formulation either as a mixture or successively, first the herbicide then the polymer formulation, as part of the soil preparation before planting or after seeding.

2. A method according to claim 1 wherein the herbicide is selected from the group consisting of oxyfluorofen, prometyne, diuron, trifluoroalin, linuron, ethalefluralin, pendimethalin, metribuzin, isopropalin, oxadiazon, dipenamid and zimazine.

3. A method according to claim 1 wherein the polymers are latex - based polymers selected from the group consisting of isoprene polymers, polyvinylacetate, polyvinylpyrolidone, styrene-acryl copolymer and sterene-butadiene copolymer.

4. A method according to claim I wherein the polymers formulation is sprayed by at least two steps, first of spraying a primer spray comprising of a low concentration polymer formulation in water with polymer concentration in the range of 2 to 10%w/w followed by at least one successive spraying of a higher polymer concentration formulation with polymer concentration of up to 50%w/w in water, wherein the herbicide is sprayed either before the first low-concentration primer formulation or is mixed with said primer formulation.

5. A method according to claim1 wherein the polymer formulation contains surfactants.

6. A method according to claim 1 wherein the cultivated plants are introduced into the field by planting their seedlings and the spraying of herbicide and polymer formulation is conducted after irrigating the soil and a predetermined period of time before planting the seedlings of said cultivated plants to allow the polymer formulation to dry and form a plastic mulch.

7. A method according to claim 6 wherein the cultivated plants are selected from the group consisting of tomato, pepper, celery, watermelon and cabbage.

8. A method according to claim 1 wherein the cultivated plants are introduced into the field by seeding and wherein the spraying of herbicide and polymers formulation is conducted after the seeding of said cultivated plants.

9. A method according to claim 8 wherein the cultivated plants are selected from the group consisting of potato, onion, peanut, watermelon, tomato and pepper.

10. A method according to claim 1 wherein the herbicide is oxyfluorofen and wherein its concentration in the spray solution is in the range of 0.2 - 2 g/liter and the solution is sprayed at a dose of 20 to 80 *liters*/*1000m*^{*2*} *(liters*/*dunam).*

## Patentansprüche

1. Verfahren zum Verhindern einer Schädigung der aus der Erde herausragenden Pflanzenteilen von angebauten Pflanzen durch ein Herbizid, umfassend das Besprühen der Bodenoberfläche mit einem Herbizid und einer membranbildenden Polymerformulierung entweder als Mischung oder nacheinander, zuerst das Herbizid und dann die Polymerformulierung als Teil der Bodenvorbereitung vor dem Bepflanzen oder nach dem Säen.

2. Verfahren gemäß Anspruch 1, wobei das Herbizid ausgewählt ist aus der Gruppe bestehend aus Oxyfluorofen, Prometryn, Diuron, Trifluoroalin, Linuron, Ethalfluralin, Pendimethalin, Metribuzin, Isopropalin, Oxadiazon, Dipenamid und Zimazin.

3. Verfahren gemäß Anspruch 1, wobei die Polymere Polymere auf Latexbasis sind, ausgewählt aus der Gruppe bestehend aus Isoprenpolymeren, Polyvinylacetat, Polyvinylpyrolidon, Styrol-Acryl-Copolymer und Styrol-Butadien-Copolymer.

4. Verfahren gemäß Anspruch 1, wobei die Polymerformulierung in wenigstens zwei Schritten aufgesprüht wird, wobei zuerst ein Primerspray, umfassend eine Polymerformulierung mit geringer Konzentration in Wasser mit einer Polymerkonzentration in dem Bereich von 2 bis 10 Gew.-% aufgesprüht wird, gefolgt von wenigstens einem sich anschließenden Besprühen einer Polymerformulierung mit einer höheren Konzentration, mit einer Polymerkonzentration von bis zu 50 Gew.-% in Wasser, wobei das Herbizid entweder vor der ersten Primerformulierung mit geringer Konzentration aufgesprüht wird oder mit der Primerfomulierung vermischt wird.

5. Verfahren gemäß Anspruch 1, wobei die Polymerformulierung Tenside enthält.

6. Verfahren gemäß Anspruch 1, wobei die angebauten Pflanzen in das Feld eingeführt werden, indem die Sämlinge angepflanzt werden und das Sprühen des Herbizids und der Polymerformulierung nach dem Bewässern des Bodens ausgeführt wird und nach einer vorgegebenen Zeitdauer vor dem Pflanzen der Sämlinge der angebauten Pflanzen, um der Polymerformulierung das Trocknen und Ausbilden einer Plastikmulche zu ermöglichen.

7. Verfahren gemäß Anspruch 6, wobei die angebauten Pflanzen ausgewählt sind aus der Gruppe bestehend aus Tomate, Pfeffer, Sellerie, Wassermelone und Kohl.

8. Verfahren gemäß Anspruch 1, wobei die angebauten Pflanzen in das Feld durch Säen eingebracht werden und wobei das Aufsprühen der Herbizide und der Polymerformulierung nach dem Säen der angebauten Pflanzen durchgeführt wird.

9. Verfahren gemäß Anspruch 1, wobei die angebauten Pflanzen ausgewählt sind aus der Gruppe bestehend aus Kartoffel, Zwiebel, Erdnuss, Wassermelone, Tomaten und Pfeffer.

10. Verfahren gemäß Anspruch 1, wobei das Herbizid Oxyfluorofen ist und wobei dessen Konzentration in der Sprühlösung im Bereich von 0.2-2 g/liter liegt und die Lösung mit einer Menge von 20 bis 80 liter/1000 m² (liter/dunam) aufgesprüht wird.

## Revendications

1. Procédé pour empêcher un herbicide d'endommager les parties de plantes cultivées dépassant du sol, comprenant la pulvérisation de la surface du sol avec de l'herbicide et avec une formule polymère formant membrane soit mélangés soit successivement, d'abord l'herbicide puis la formule polymère, faisant partie de la préparation du sol avant la plantation ou après l'ensemencement.

2. Procédé selon la revendication 1, dans lequel l'herbicide est sélectionné parmi le groupe constitué d'oxyfluorfène, de prométryne, de diuron, de trifluoraline, de linuron, d'ethalefluralin, de pendiméthaline, de métribuzine, d'isopropalin, d'oxadiazon, de dipenamid et de zimazine.

3. Procédé selon la revendication 1, dans lequel les polymères sont des polymères de latex sélectionnés parmi le groupe constitué de polymères d'isoprène, de polyacétate de vinyle, de polyvinylpyrrolidone, de copolymère styrène-acrylique et de copolymère styrène-butadiène.

4. Procédé selon la revendication 1, dans lequel la formule polymère est pulvérisée en au moins deux étapes, d'abord en effectuant une première pulvérisation consistant en une formule polymère à faible concentration dans l'eau avec une concentration en polymères de l'ordre de 2 à 10% M/M suivie d'au moins une pulvérisation successive d'une formule polymère plus concentrée avec une concentration en polymère pouvant aller jusqu'à 50% M/M dans l'eau, dans laquelle l'herbicide est soit pulvérisé avant la première formule à faible concentration soit mélangé à ladite première formule.

5. Procédé selon la revendication 1, dans lequel la formule polymère contient des agents surfactants.

6. Procédé selon la revendication 1, dans lequel les plantes cultivées sont introduites dans le champ en plantant leurs plants et la pulvérisation d'herbicide et de formule polymère est effectuée après avoir irrigué le sol et à une période de temps prédéterminée avant la plantation des plants desdites plantes cultivées afin de permettre à la formule polymère de sécher et de former une couverture plastique.

7. Procédé selon la revendication 6, dans lequel les plantes cultivées sont sélectionnées parmi un groupe constitué de tomate, poivron, céleri, pastèque et choux.

8. Procédé selon la revendication 1, dans lequel les plantes cultivées sont introduites dans un champ par ensemencement, et dans lequel la pulvérisation de l'herbicide et de la formule polymère est effectuée après l'ensemencement desdites plantes cultivées.

9. Procédé selon la revendication 8, dans lequel les plantes cultivées sont sélectionnées parmi un groupe constitué de patate, oignon, cacahuète, pastèque, tomate et poivron.

10. Procédé selon la revendication 1, dans lequel l'herbicide est l'oxyfluorfène, et dans lequel la concentration de celui-ci dans la solution pulvérisable est de l'ordre de 0,2 à 2 g/litre et la solution est pulvérisée à une dose de 20 à 80 litres/1000 m² (litres/dunam).
